Europäisches Patentamt

**European Patent Office** (11) Publication number: **0 189 232**
**B1**

Office européen des brevets

(19)

(12) **EUROPEAN PATENT SPECIFICATION**

(45) Date of publication of the patent specification: 06.09.89

(21) Application number: **86200086.6**

(22) Date of filing: **21.01.86**

(51) Int. Cl.⁴: **A 01 F 15/00**

(54) Continuous roll baler.

(30) Priority: **25.01.85 US 694864**
**25.01.85 US 694866**
**25.01.85 US 694868**
**25.01.85 US 694886**

(43) Date of publication of application:
**30.07.86 Bulletin 86/31**

(45) Publication of the grant of the patent:
**06.09.89 Bulletin 89/36**

(84) Designated Contracting States:
**DE FR GB IT**

(56) References cited:
**EP-A- 0 064 117**
**EP-A- 0 156 041**
**FR-A- 2 368 214**

(73) Proprietor: **FORD NEW HOLLAND, INC. (a Delaware corp.), 500 Diller Avenue, New Holland Pennsylvania 17557 (US)**

(72) Inventor: **Merkey, John A., Route 1, Stevens, PA 17578 (US)**
Inventor: **Uhland, Francis L., 605 East Brubaker Valley Road, Lititz, PA 17543 (US)**
Inventor: **Campbell,Willis R., Route 4, Ephrata, PA 17522 (US)**
Inventor: **Bowdon, Donald F., Jr., 133 Queen Road, Gordonville PA 17529 (US)**

(74) Representative: **Vandenbroucke, Alberic T.J., FORD NEW HOLLAND N.V. Leon Claeysstraat 3A, B-8210 Zedelgem (BE)**

ACTORUM AG

## Description

This invention relates generally to a type of roll baler that is capable of continuously forming roll bales of crop material while moving across a field without stopping to discharge such bales from the roll baler. The invention also relates generally to a method of continuously forming roll bales of crop material in a roll baler while moving across a field without stopping for discharging such bales from the roll baler.

A roll baler and method of this general type are disclosed in US-A 4 045 947 assigned to the same assignee as the present application. The disclosed baler includes a lower bale forming apron and a pair of upper bale forming aprons. The upper bale forming aprons cooperate with the lower bale forming apron to define front and rear bale forming chambers. When a bale started in the front chamber reaches a predetermined size, it is transferred to the rear chamber where it is completed. While the completed roll bale is being wrapped with twine and discharged from the rear chamber, another bale is started in the front chamber. This provides for continuous baling operation. The baler disclosed in US-A 4 045 947 has not been commercially successful because it is too complex and also too expensive to manufacture when compared to conventional roll balers that have been available for several years. Another drawback of this type of continuous roll baler is also that the roll bales tend to fall apart during the transfer from the front chamber to the rear chamber.

Another continuous roll baler is shown and described in EP-A 0 064 117. Up to some extent, this further continuous roll baler is rather similar to the roll baler according to US-A 4 045 947 reviewed hereabove in as much as this baler equally comprises front and rear bale forming chambers. The major difference probably resides in the fact that according to EP-A 0 064 117 only one upper bale forming apron is provided which cooperates with the lower bale forming apron to define therebetween both the front and the rear bale forming chambers. Movable indexing means are associated with the single upper bale forming apron and include three equiangularly spaced indexing guide members which successively are engageable with the upper bale forming apron for guiding said upper bale forming apron proximate to the lower bale forming apron at a location inbetween the front and rear bale forming chambers.

It is an object of the present invention to provide a continuous roll baler which is simple in design and relatively inexpensive to manufacture and yet enables a continuous roll baling operation which avoids the operating problems encountered with prior art continuous roll balers and which results in a substantially increased output.

The present invention provides a baler for forming roll bales of crop material and which comprises:

– lower bale forming means;
– upper bale forming means cooperable with the lower bale forming means for defining a bale starting zone therebetween; and
– movable indexing means associated with the upper bale forming means and including an indexing guide member having a home position for guiding the upper bale forming means proximate to the lower bale forming means at the rear of the bale starting zone; said indexing means being operable to move the indexing guide member from the home position in a substantially circular path of travel when a roll bale started in the bale starting zone, reaches a predetermined size; and which is characterized in that:
– the indexing means comprise only a single indexing guide member; and
– said indexing means, during the formation of a bale in the baler, are operated to move said single indexing guide member from its home position through a full 360 degrees revolution around said path of travel and back to said home position.

In its preferred embodiment, the roll baler of the present invention includes a main body portion and an auxiliary body portion pivotally connected to the main body portion for movement between a closed bale forming position and an open bale discharge position. The lower bale forming means are supported on the main body portion and the upper bale forming means are supported on the main body portion and the auxiliary body portion. The main body portion includes a pair of sidewalls, and the indexing means include a pair of disks disposed inside the main body portion closely adjacent and parallel to the pair of sidewalls. The pair of disks are rotatably mounted on the pair of sidewalls, and the single indexing guide member is connected between the pair of disks at a location radially outwardly from the rotary axis of the disks.

The upper bale forming means comprise a lower span which is expandable in length around the periphery of a roll bale during formation thereof in the baler. The movable indexing guide member, when in the home position, is located rearwardly of said lower span and is movable from the home position along said substantially circular path of travel toward a position situated forwardly of said lower span extending around the periphery of the roll bale being formed.

The roll baler of the present invention also includes drive means engaging the peripheral edges of the pair of disks for rotating the pair of disks in a direction to cause movement of the indexing guide member as already said. The drive means comprise sprockets adapted for engagement with teeth formed on the peripheral edges of the discs. The sprockets are connected by a cross shaft and an electric clutch and brake device is coupled to one end of said crop shaft. The electric clutch and brake device is selectively operable either as a clutch to allow the shaft, the sprockets and the disks stationary.

According to another aspect of the present invention, a method is provided for forming roll bales of crop material in a baler having:

a) upper and lower bale forming means cooperating to define a bale starting zone therebetween; b) drive members associated with respectively the upper and lower bale forming means for moving said bale forming means in directions to roll crop material into a roll bale in the bale starting zone, and c) movable indexing means associated with the upper bale forming means and including an indexing guide member having a home position for guiding the upper bale forming means proximate to the lower bale forming means at the rear of the bale starting zone; the method comprising the steps of:

- engaging the drive members with a power source to move the bale forming means in said directions to start a first roll bale in the bale starting zone;
- holding the indexing guide member in its home position during the formation of the first roll bale in the bale starting zone; and
- moving the indexing guide member from the home position in a substantially circular path of travel when the first roll bale reaches a predetermined size; and
- being characterized in that it further also comprises the steps of:
- returning said indexing guide member to the home position through one full 360 degrees revolution along said generally circular path of travel when said first roll bale is being completed to thereby reform the bale starting zone; and
- holding said indexing guide member in the home position again while simultaneously discharging the first roll bale from the baler and starting a second roll bale in the reformed bale starting zone; the arrangement further being such that the indexing means comprise only one single indexing guide member.

Preferably the method according to the invention also comprises the step of wrapping the first bale in the baler with wrapping material while starting the second bale in the reformed bale starting zone and prior to discharging said first roll bale from the baler.

The method also includes the steps of:
- continueing to add crop material to the first roll bale in the baler while moving the single indexing guide member from the home position less than one full 360 degrees revolution along the substantially circular path of travel to another position;
- stopping the adding of crop material to the first roll bale in the baler when moving the single indexing guide member from another position back to the home position, and
- subsequently initiating the formation of the second roll bale in the reformed bale forming zone while holding the single indexing guide member again in the home position.

The preferred method according to the invention is also characterized in the further steps of:
- disengaging the drive members from the power source when the first roll bale is being completed and when the single indexing guide member has been moved from the home position to the another position less than one full 360 degrees revolution along the substantially circular path of travel, and
- re-engaging the drive members with the power source when the single indexing guide member has been moved from said another position back to the home position thereby completing said full 360 degrees revolution.

Preferably said another position of the single indexing guide member is located part of the way along the substantially circular path of travel and adjacent the drive member for the upper bale forming means.

A continuous roll baler constructed in accordance with the present invention and a method of continuously forming roll bales of crop material with this roll baler will now be described in greater detail, by way of example, with reference to the accompanying drawings, in which:

Fig. 1 is a side view of a roll baler embodying the present invention as a roll bale is being started;

Fig. 2 is a side view of the roll baler of Fig. 1 when a roll bale of predetermined diameter has been formed;

Fig. 3 is a side view of the roll baler of Fig. 1 during completion of a roll bale;

Fig. 4 is another side view of the roll baler of Fig. 1 as a roll bale is being completed;

Fig. 5 is a side view of the roll baler of Fig. 1 when one roll bale has been completed and another roll bale is being started; and

Fig. 6 is a side view of the roll baler of Fig. 1 during discharge of a completed roll bale.

In the following description, right hand and left hand references are determined by standing at the rear of the machine and facing in the direction of forward travel. Also, it is to be understood that such terms as «forward», «rearward», «left», «right», «upwardly», etc. are words of convenience and are not to be construed as limiting terms.

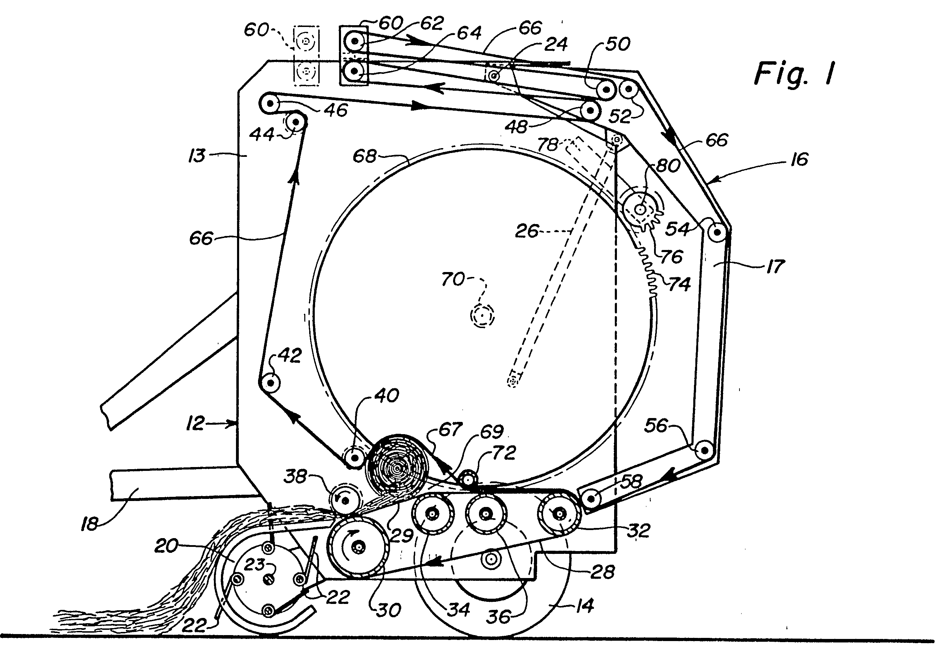

Referring to Fig. 1, a roll baler 10 subject of the present invention is similar to the type disclosed in U.S. Patent No. 3 914 926 incorporated herein by reference. The type of baler disclosed in this patent has been manufactured and sold by the Gehl Company as Model Nos. 1400 and 1600. The roll baler 10 includes a main body portion or frame 12 supported by a pair of wheels 14, and an auxiliary body portion or tailgate 16. A tongue 18 is provided on the frame 12 for connection to a tractor. A pickup device 20 mounted on the frame 12 includes a plurality of tines 22 rotatable about a shaft 23 for engaging and picking up crop material arranged in windrows on the ground.

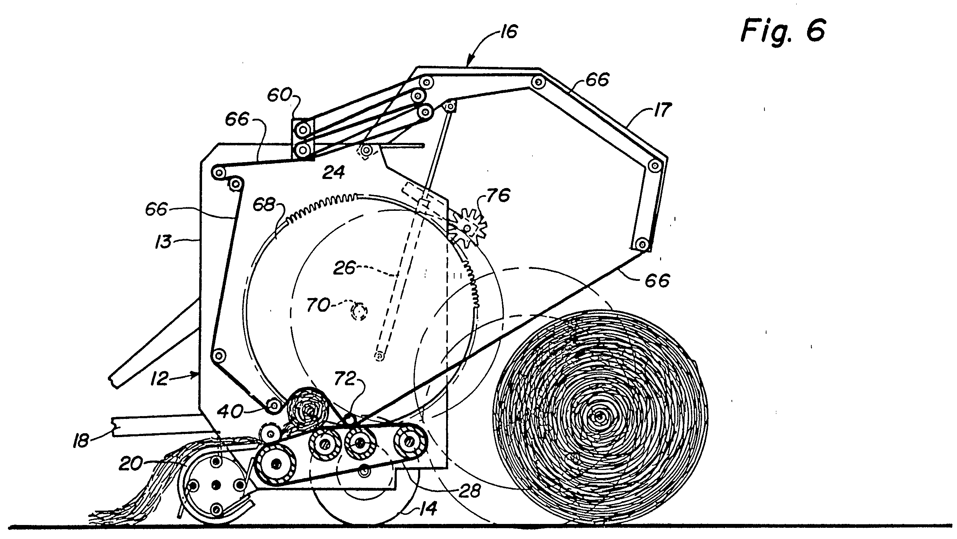

The frame 12 includes a pair of sidewalls 13 which are vertically oriented and transversely spaced apart. The tailgate 16 includes a pair of side members 17 rigidly connected together by cross members (not shown). The side members 17 of the tailgate 16 are pivotally connected by stub shafts 24 to the sidewalls 13 of the frame 12. A pair of hydraulic cylinders 26 are connected between the sidewalls 13 of the frame 12 and the side members 17 of the tailgate 16 for moving the tailgate 16 between the closed position shown in Fig. 1 and the open position shown in Fig. 6. Lower bale forming means such as a conveyor 28 in the form of an endless belt extend between the sidewalls 13 of the frame 12 and are supported on front and rear rollers 30 and 32, respectively, which are rotatably carried on the frame 12. The upper run 29 of the conveyor 28 is supported between the front and rear rollers 30, 32 by intermediate rollers 34 and 36 which are also rotatably carried on the frame 12. A press roller 38 extends between and is supported on the sidewalls 13 of the frame 12 directly above the front roller 30 of the conveyor 28 to compress incoming crop material into a mat. The press roller 38 and the front roller 30 of the conveyor 28 are connected by conventional drive means (not shown), such as chains and sprockets, to the power take off unit (PTO) of a tractor in a manner to cause rotation of the press roller 38 and the conveyor front roller 30 in the directions indicated in Fig. 1. The upper run 29 of the conveyor 28 moves rearwardly from the front roller 30 to the rear roller 32.

A plurality of guide members or rollers 40, 42, 44 and 46 extend between and are rotatably supported on the sidewalls 13 of the frame 12. Another plurality of guide members or rollers 48, 50, 52, 54, 56 and 58 extend between and are rotatably supported on the side members 17 of the tailgate 16. Shuttle members 60 are slidably mounted on the sidewalls 13 of the frame 12 for back and forth movement in a substantially horizontal direction near the top of the frame 12. A pair of guide members or rollers 62 and 64 extend between and are rotatably carried by the shuttle members 60. Upper bale forming means preferably comprised of a series of endless belts 66 extend around the aforementioned guide members or rollers in a side-by-side, transversely spaced apart arrangement between the sidewalls 13 of the frame 12 and also between the side members 17 of the tailgate 16. The rollers 40 and 44 are connected to the PTO of a tractor by drive means (not shown) in a conventional manner to drive the belts 66 in the direction and along the path indicated in Fig. 1. A conventional clutch mechanism (not shown), which may be electrically, mechanically or hydraulically operated, is provided in the drive means (not shown) to the drive rollers 40 and 44 to enable the drive rollers 40 and 44 to be disengaged from the tractor PTO to interrupt movement of the belts 66. The shuttle members 60 are urged forwardly toward the phantom position shown in Fig. 1 by spring mechanisms (not shown) to maintain a certain amount of tension in the belts 66.

According to the preferred embodiment of the present invention, a pair of disks 68 are disposed inside the frame 12 closely adjacent and parallel to the sidewalls 13 thereof. Each disk 68 is in the form of a flat circular plate. The disks 68 are fixed at their centers to stub shafts 70 which in turn are rotatably mounted in bearing members located in the sidewalls 13 of the frame 12. An indexing guide member in the form of a roller 72 is rotatably connected between the disks 68 at a location radially outwardly from the stub shafts 70. The indexing roller 72 extends transversely of the baler 10. Teeth 74 formed on the peripheral edges of the disks 68 are adapted for engagement with sprockets 76 rotatably mounted on brackets 78 attached to the sidewalls 13 of the frame 12. The sprockets 76 are connected by a cross shaft 80. One end of the cross shaft 80 is coupled to an electric clutch and brake device (not shown) such as Model No. IXC-931 manufactured by Warner Electric Corporation. This electric clutch and brake device may be selectively operated as either a clutch to allow the shaft 80 and the sprockets 76 to be rotated or as a brake to hold the shaft 80 and the sprockets 76 stationary.

With reference to Fig. 1, it will be seen that the indexing roller 72 is provided inside the loop formed by the endless belts 66 of the upper bale forming means. It also will be seen that, when the indexing roller 72 is in the position shown in Figure 1, (called hereafter the home position), the belts pass underneath this indexing roller 72 in close proximity to the upper run 29 of the conveyor 28 so that a lower span 67 of the belts 66 running from the indexing roller 72 to the drive roller 40 moves in substantially the opposite direction as the upper run 29 of the conveyor 28. This relationship between the direction of movement of the lower span 67 of the belts 66 and the direction of movement of the upper run 29 of the conveyor 28 causes crop material to be coiled or wrapped in a manner to effectively start a roll bale. The lower span 67 of the belts 66 is expandable in length during bale formation.

During operation, the baler 10 is towed across a field by a tractor. The pickup device 20 delivers crop material between the press roller 38 and the front of the conveyor 28. The upper run 29 of the conveyor 28 carries the crop material rearwardly into a bale starting zone 69 where it is engaged by the lower span 67 of the belts 66 which causes coiling of the crop material and formation of the core of a roll bale. During this stage of bale formation, the electric clutch and brake device (not shown) on the shaft 80 is operated as a brake so that the indexing means including the disks 68 and the indexing roller 72 are held stationary by the sprockets 76 with the indexing roller 72 being located in the home position as shown in Fig. 1 thereby causing the belts 66 to be pinched against the upper run 29 of the conveyor 28 at the rear of the bale starting zone 69. As the bale increases in size, the shuttle members 60 move rearwardly along the top of the frame 12 as shown in Fig. 1 against the force of the spring mechanisms (not shown). This allows the lower span 67 of the belts 66 to expand around the periphery of the bale.

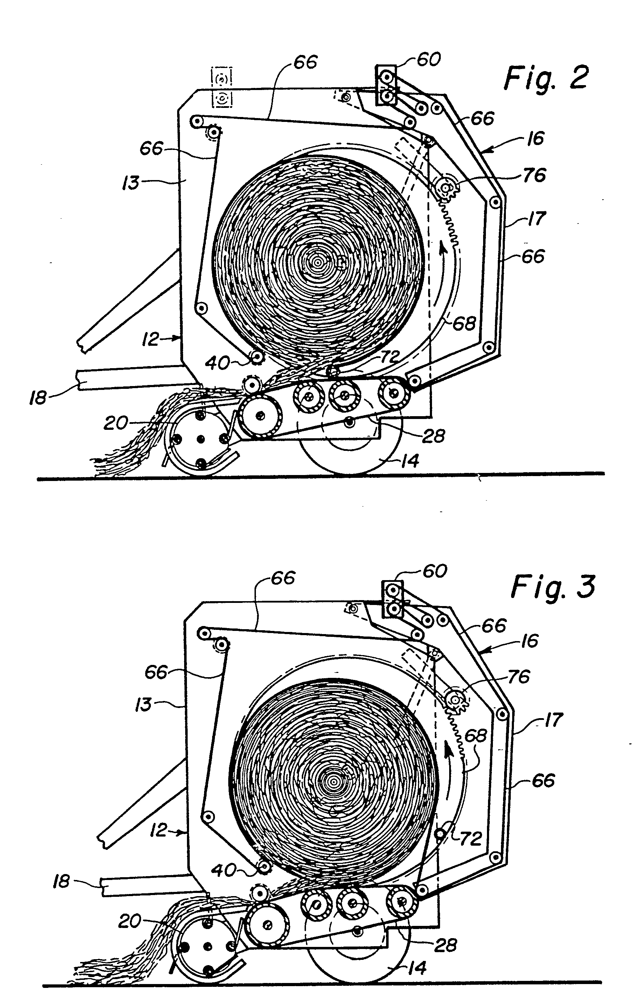

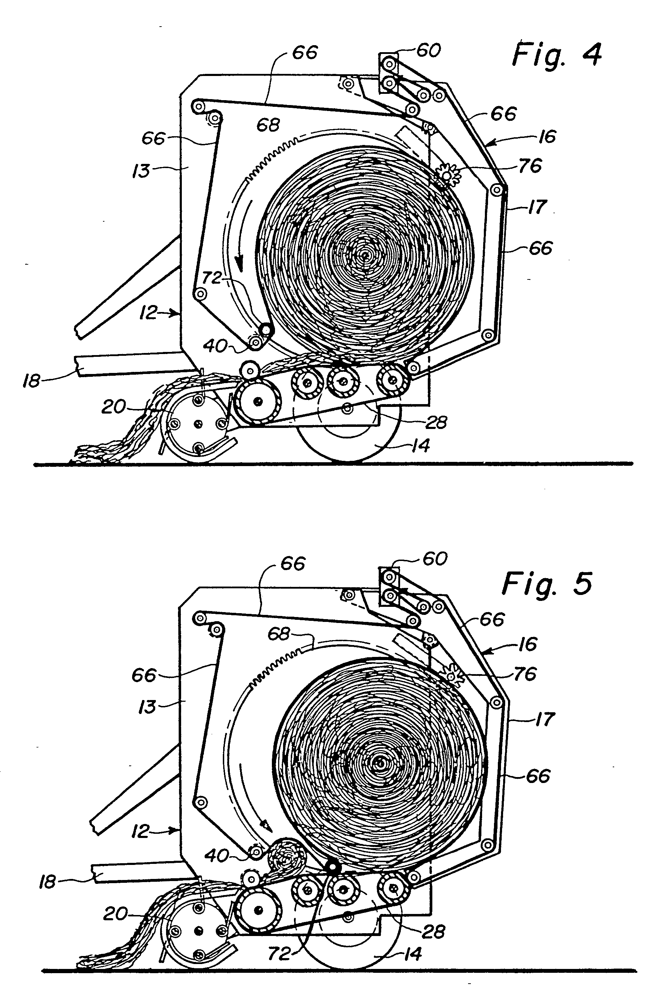

When a bale of predetermined size has been formed, the electric clutch and brake device (not shown) on the shaft 80 is operated as a clutch so that the sprockets 76 are driven via the shaft 80 thereby causing rotation of the indexing means including the disks 68 and the indexing guide roller 72 in the direction indicated in Fig. 2 whereby the indexing roller 72 is moved from its home position in a substantially circular path of travel generally about the periphery of the bale. The disks 68 together with the indexing roller 72 thereon are rotated through a full 360 degrees revolution. Initial rotation of the disks 68 moves the indexing roller 72 out of engagement with the belts 66 as seen in Fig. 3 wile crop material continues to be added to the bale. When the indexing roller 72 has moved to the position shown in Fig. 4 where it is adjacent the drive roller 40, the bale will have moved slightly rearwardly thereby partially extending into the tailgate 16. At this point, the belts 66 are disconnected from the PTO of the tractor by disengaging the drive means (not shown) between the drive rollers 40 and 44 and the tractor PTO. This facilitates continued further rotational movement of the indexing roller 72 in a direction opposite to the pull in the belts 66 and from the position proximate to the drive roller 40 shown in Fig. 4 across the bale chamber inlet throat and back to the home position shown in Fig. 5. Thereby the flow of crop material from the pick-up device 20 to the bale in the bale forming chamber is interrupted. The belts 66 remain disconnected from the tractor PTO until the disks 68 complete one full 360° revolution and the indexing roller 72 returns to its home position as shown in Fig. 5. In practice, this takes only a very short while and does not necessitate interruption of the forward movement of the roll baler across the field. In other words, the pick-up device 20 continues to pick up crop material from the field and deliver it to the press roll 38. As the indexing roller 72 is moved across the throat of the bale chamber, further crop material which is supplied by the pick-up device 20, is accumulated in the zone forwardly of the indexing roller 72 and between the upper run 29 of the lower belt 28 and the lower span 67 of the upper belts 66 between the indexing roller 72 and the drive roller 40. This zone is the bale starting zone 69 already described.

When the indexing roller 72 is returned to its home position again, the bale starting zone 69 is consequently reformed and the belts 66 are reconnected to the tractor PTO. A new bale is then started in the bale starting zone 69 while the previously completed bale positioned rearwardly of the newly formed bale starting zone 69, is being wrapped in a net or other wrapping material in a conventional manner. Subsequent to this wrapper operation, the tailgate 16 is moved to its open position as shown in Fig. 6 by extending the hydraulic cylinders 26, and the completed bale is discharged. Subsequent to discharging the completed bale from the roll baler 10, the tailgate 16 is moved back to its closed position of Fig. 1 and the baling operation continues without interruption.

It will be understood that the present invention is not limited to the particular roll baler 10 which is derived from the roll baler disclosed in U.S. Patent No. 3 914 926. Accordingly, the present invention may be incorporated in other types of roll balers to form continuous roll balers.

From what precedes it will be seen that the invention provides a continuous roll baler which is simple in design and relatively inexpensive to manufacture and yet enables a continuous roll baling operation, which in turn results in a substantially increased ouput.

More specifically, it also will be seen from what precedes that the present invention basically provides a «one chamber» continuous roll baler, which is in contrast with the prior art continuous roll balers which have two chambers of one form or another (see e. g. EP 0 064 117). In the baler according to the instant invention, a single bale starting chamber of zone 69 is provided which «grows» together with a bale being formed therein till the said bale reaches its desired maximum size. Once the bale is completed, i.e. reaches its full size, the bale forming chamber or zone is relocated in an ingenious manner and returns to its original or starting dimension and shape forwardly of the completed bale, which still is held in the baler for a short while. This is sufficient for wrapping said bale with a wrapping material of any type.

While, as already said, the baler subject of the invention basically is a «one chamber» continuous roll baler, it is also noted that the design thereof nevertheless allows two chambers to be formed and maintained for a short while during the bale formation. Indeed, a full size bale chamber is maintained alongside and together with the relocation or reformation of the bale starting zone or chamber in its original shape and dimension during the period of time from the moment the bale reaches its full size until it is being discharged following the wrapping thereof in the machine. This period of time is only a fraction of the time needed for forming a roll bale.

The following claims are intended to cover all modifications and variations of the preferred embodiment of the present invention disclosed herein without departing from the spirit and scope of the invention.

## Claims

1. A baler for forming roll bales of crop material comprising:
   - lower bale forming means (28);
   - upper bale forming means (66) cooperable with the lower bale forming means (28) for defining a bale starting zone (69) therebetween; and
   - movable indexing means (68, 72) associated with the upper bale forming means (66) and including an indexing guide member (72) having a home position for guiding the upper bale forming means (66) proximate to the lower bale forming means (28) at the rear of the bale starting zone (69); said indexing means (68, 72) being operable to move the indexing guide member (72) from the home position in a substantially circular path of travel when a roll bale started in the bale starting zone (69), reaches a predetermined size; characterized in that:
- the indexing means (68, 72) comprise only a single indexing guide member (72); and
- said indexing means (68, 72), during the formation of a bale in the baler, are operated to move said single indexing guide member (72) from its home position through a full 360 degrees revolution around said path of travel and back to said home position.

2. A baler according to claim 1, characterized in that the path of travel of the single indexing guide member (72) extends generally about the periphery of the bale being formed in the baler.

3. A baler according to claim 1 or 2, characterized in that the movable indexing guide member comprises a roller (72) engageable with the upper bale forming means (66).

4. A baler according to any of the preceding claims, characterized in that the movable indexing guide member (72), when positioned in the home position, causes the upper bale forming means (66) to be pinched against the lower bale forming means (28) at the rear of the bale starting zone (69).

5. A baler according to any one of the preceding claims, characterized in that the upper bale forming means (66) comprise a lower span (67) which is expandable in length around the periphery of a roll bale during formation thereof in the baler; the movable indexing guide member (72), when in the home position, being positioned rearwardly of said lower span (67) and being movable from said home position along said substantially circular path of travel toward a position situated forwardly of said lower span (67) extending around the periphery of the roll bale being formed.

6. A baler according to any one of the preceding claims and comprising a pair of sidewalls (13) generally at the transversely opposite sides of the lower and upper bale forming means (28, resp. 66); the sidewalls (13) together with the lower and upper bale forming means (28, resp. 66) defining therebetween the bale starting zone (69) and the baler further being characterized in that the movable indexing guide member (72) extends transversely between the transversely opposite sidewalls (13) and generally parallel to said bale starting zone (69).

7. A baler according to any one of the preceding claims, characterized in that:
- the lower bale forming means comprise a conveyor in the form of an endless belt (28); and
- the upper bale forming means comprise a series of endless belts (66) arranged in transverse side-by-side relationship; the movable indexing guide member (72) being engageable with said side-by-side extending belts (66).

8. A baler according to claim 7, characterized in that the movable indexing guide member (72) is engageable with the side-by-side endless belts (66) forming the upper bale forming means at a position within the loop thereof and at the side thereof facing away from the lower bale forming means (28).

9. A baler according to any one of the preceding claims characterized in that the baler further also comprises a main body portion (12) and an auxiliary body portion (12) for movement between a closed, bale forming position and an open, bale discharge position; the movable indexing means (68, 72) being movably supported on the main body portion (12).

10. A baler according to claim 9, characterized in that:
- the indexing means (68, 72) comprise a pair of disks (68) mounted for rotation on the main body portion (12) and
- the indexing guide member (72) is connected between said pair of disks (68).

11. A baler according to claim 10, when appended to claim 6, characterized in that each disk (68) of the pair of disks (68) is disposed closely adjacent and parallel to a corresponding sidewall (13) at the side thereof facing the other sidewall (13); said disks (68) being rotatably mounted on the respective adjacent sidewalls (13).

12. A baler according to claim 10 or 11, characterized in that the indexing guide member (72) is connected between the pair of disks (68) at a location radially outwardly from the axis of rotation (70) thereof.

13. A baler according to any one of the claims 10 to 12, characterized in that it further also comprises drive means (76) engaging the peripheral edges of the pair of discs (68) for rotating said pair of discs (68) to cause movement of the indexing guide member (72) from the home position in the substantially circular path of travel.

14. A baler according to claim 13, characterized in that the drive means comprise sprockets (76) adapted for engagement with teeth (74) formed on the peripheral edges of the pair of discs (68).

15. A baler according to claim 14, characterized in that the sprockets (76) are connected to each other by a cross shaft (80) and an electric clutch and brake device is couled to one end of said cross shaft (80); the electric clutch and brake device being selectively operable either as a clutch to allow the shaft (80), the sprockets (76) and the discs (68) to be rotated or as a brake to hold the shaft (80), the sprockets (76) and the discs (68) stationary.

16. A baler according to any one of the preceding claims characterized in that drive means are associated with the upper bale forming means (66) for driving said upper bale forming means (66) in a direction for, in cooperation with the lower bale forming means (28), causing crop material to be coiled therebetween; said drive means comprising drive rollers (40, 44) engaging with the upper bale forming means (66) and a clutch mechanism for enabling the drive to the upper bale forming means (66) to be engaged, respectively disengaged.

17. A method of forming roll bales of crop material in a baler having: a) upper and lower bale forming means (66, 28) cooperating to define a bale starting zone (69) therebetween; b) drive members (40, 30) associated with respectively the upper and lower bale forming means (66, 28) for moving said bale forming means (66, 28) in directions to roll crop material into a roll bale in the bale starting zone (69), and c) movable indexing means (68, 72) associated with the upper bale forming means (66) and including an indexing guide member (72) having a home position for guiding the upper bale forming means (28) proximate to the lower bale forming means (28) at the rear of the bale starting zone (69); the method comprising the steps of:

- engaging the drive members (40, 30) with a power source to move the bale forming means (66, 28) in said directions to start a first roll bale in the bale starting zone (69);

- holding the indexing guide member (72) in its home position during the formation of the first roll bale in the bale starting zone (69); and

- moving the indexing guide member (72) from the home position in a substantially circular path of travel when the first roll bale reaches a predetermined size; and

being characterized in that it further also comprises the steps of:

- returning said indexing guide member (72) to the home position through one full 360 degrees revolution along said generally circular path of travel when said first roll bale is being completed to thereby reform the bale starting zone (69); and

- holding said indexing guide member (72) in the home position again while simultaneously discharging the first roll bale from the baler and starting a second roll bale in the reformed bale starting zone (69); the arrangement further being such that the indexing means (68, 72) comprise only one single indexing guide member (72).

18. A method according to claim 17, characterized in that it further also comprises the step of wrapping the first bale in the baler with wrapping material while starting the second bale in the reformed bale starting zone (69) and prior to discharging said first roll bale from the baler.

19. A method according to claim 17 or 18, characterized in that it further also comprises the step of continueing to add crop material to the first roll bale in the baler while moving the single indexing guide member (72) from the home position less than one full 360 degrees revolution along the substantially circular path of travel to another position.

20. A method according to claim 19, characterized in that it further also comprises the steps of:

- stopping the adding of crop material to the first roll bale in the baler when moving the single indexing guide member (72) from the other position back to the home position, and

- subsequently initiating the formation of the second roll bale in the reformed bale forming zone (69) while holding the indexing guide member (72) again in the home position.

21. A method according to any one of the claims 17 or 20, charcterized in that the moving step comprises rotating a pair of discs (68) provided on the baler and having the single indexing guide member (72) extending therebetween at a location radially outwardly from the rotary axis (70) of the discs (68), when the first roll bale reaches said predetermined size.

22. A method according to claim 21, characterized in that the returning step comprises stopping the pair of discs (68) after the single indexing guide member (72) makes said one full 360 degrees revolution along the circular path of travel.

23. A method according to any one of the claims 17 to 22, charcterized in that the holding steps include pinching the upper bale forming means (66) against the lower bale forming means (28) at the rear of the bale starting zone (69).

24. A method according to claim 19 or any one of the claims 20 to 23 when appended to claim 19, characterized in that it further also comprises the steps of:

- disengaging the drive members (40, 30) from the power source when the first roll bale is being completed and when the single indexing guide member (72) has been moved from the home position to the other position less than one full 360 degrees revolution along the substantially circular path of travel, and

- re-engaging the drive members (40, 30) with the power source when the single indexing guide member (72) has been moved from said other position back to the home position thereby completing said full 360 degrees revolution.

25. A method according to claim 24, characterized in that said other position of the single indexing guide member (72) is located part of the way along the substantially circular path of travel and adjacent the drive member (40) for the upper bale forming means (66).

**Revendications**

1. Ramasseuse-presse pour former des balles cylindriques de produits de récolte, comportant:

- des moyens de formage de balles inférieurs (28);

- des moyens de formage de balles supérieurs (66) aptes à coopérer avec les moyens de formage des halles inférieurs (28) en vue de définir entre eux une zone de commencement de balles (69); et

- des moyens d'indexation mobiles (68, 72) associés aux moyens de formage de balles supérieurs (66) et comportant un organe de guidage d'indexation (72) qui possède une position de repos pour guider les moyens de formage de balles supérieurs (66) à proximité des moyens de formage de balles inférieurs (28), à l'arrière de la zone de commencement de balles (69); lesdits moyens d'indexation (68, 72) étant aptes à opérer pour déplacer l'organe de guidage d'indexation (72) à partir de la position de repos suivant une trajectoire de déplacement sensiblement circulaire, lorsqu'une balle cylindrique commencée dans la zone de commencement de balles (69) atteint une taille prédéterminée; caractérisée en ce que:

– les moyens d'indexation (68, 72) ne comportent qu'un organe de guidage d'indexation unique (72); et

– lesdits moyens d'indexation (68, 72) sont, pendant la formation d'une balle dans la ramasseuse-presse, actionnés pour déplacer ledit organe de guidage d'indexation unique (72) afin qu'à partir de sa position de repos, il effectue un tour complet de 360 degrés autour de ladite trajectoire de déplacement et revienne dans ladite position de repos.

2. Ramasseuse-presse selon la revendication 1, caractérisée en ce que la trajectoire de déplacement de l'organe de guidage d'indexation unique (72) s'étend, d'une manière générale, autour de la périphérie de la balle en train d'être, formée dans la ramasseuse-presse.

3. Ramasseuse-presse selon la revendication 1 ou 2, caractérisée en ce que l'organe de guidage d'indexation mobile comporte un rouleau (72) apte à venir en prise avec les moyens de formage de balles supérieurs (66).

4. Ramasseuse-presse selon l'une quelconque des revendications précédentes, caractérisée en ce que, lorsqu'il se trouve dans la position de repos, l'organe de guidage d'indexation mobile (72) contraint les moyens de formage de balles supérieurs (66) à être serrés contre les moyens de formage de balles inférieurs (28), à l'arrière de la zone de commencement de balles (69).

5. Ramasseuse-presse selon l'une quelconque des revendications précédentes, caractérisé en ce que les moyens de formage de balles supérieurs (66) comportent un tronçon inférieur (67) extensible en longueur autour de la périphérie d'une balle cylindrique pendant la formation de celle-ci dans la ramasseuse-presse; l'organe de guidage d'indexation mobile (72) étant, lorsqu'il occupe la position de repos, positionné à l'arrière dudit tronçon inférieur (67) et pouvant se déplacer à partir de ladite position de repos, le long de ladite trajectoire de déplacement sensiblement circulaire, en direction d'une position située à l'avant dudit tronçon inférieur (67) qui s'étend autour de la périphérie de la balle cylindrique en cours de formage.

6. Ramasseuse-presse selon l'une quelconque des revendications précédentes et comportant deux parois latérales (13) stiuées, d'une manière générale, au niveau des côtés opposés transversalement des moyens de formage de balles inférieurs et supérieurs (28, resp. 66); les parois latérales (13) définissant, conjointement avec les moyens de formage de balles inférieurs et supérieurs (28, resp. 66) et entre eux, la zone de commencement de balles (69), et la ramasseuse-presse étant, en outre, caractérisée en ce que l'organe de guidage d'indexation mobile (72) s'étend transversalement entre les parois latérales opposées transversalement (13) et, dans l'ensemble, parallèlement à ladite zone de commencement de balles (69).

7. Ramasseuse-presse selon l'une quelconque des revendications précédentes, caractérisée en ce que:
– les moyens de formage de balles inférieurs comportent un transporteur qui se présente sous la forme d'une bande sans fin (28); et
– les moyens de formage de balles supérieurs comportent une série de bandes sans fin (66) disposées dans une relation juxtaposée transversalement; l'organe de guidage d'indexation mobile (72) étant apte à venir en prise avec lesdites bandes juxtaposées (66).

8. Ramasseuse-presse selon la revendication 7, caractérisée en ce que l'organe de guidage d'indexation mobile (72) est apte à venir en prise avec lesdites bandes sans fin juxtaposées (66) qui constituent les moyens de formage de balles supérieurs, au niveau d'une position située à l'intérieur de la boucle formée par ces derniers et du côté de ceux-ci tourné à l'opposé des moyens de formage de balles inférieurs (28).

9. Ramasseuse-presse selon l'une quelconque des revendications précédentes, caractérisée en ce qu'elle comporte également une partie formant corps principal (12) et une partie formant coprs auxiliaire (16) montée pivotante sur cette derlière, en vue d'un déplacement entre une position fermée de formage de balles et une position ouverte d'évacuation de balles; les moyens d'indexation mobiles (68, 72) étant supportés d'une manière mobile sur la partie formant corps principal (12).

10. Ramasseuse-presse selon la revendication 9, caractérisée en ce que:
– les moyens d'indexation (68, 72) comportent deux disques (68) montés en vue d'une rotation sur la partie formant corps principal (12) et
– l'organe de guidage d'indexation (72) est intercalé entre lesdits deux disques (68).

11. Ramasseuse-presse selon la revendication 10, lorsqu'elle est annexée à la revendication 6, caractérisée en ce que chacun des deux disques (68) est disposé tout près d'une paroi latérale (13) correspondante et parallèlement à cette dernière, au niveau du côté de celle-ci tourné vers l'autre paroi latérale (13), lesdits disques (68) étant montés mobiles en rotation sur les parois latérales adjacentes (13) respectives.

12. Ramasseuse-presse selon la revendication 10 ou 11, caractérisée en ce que l'organe de guidage d'indexation (72) est intercalé entre les deux disques (68), en un point situé radialement vers l'extérieur par rapport à l'axe de rotation (70) de ceux-ci.

13. Ramasseuse-presse selon l'une quelconque des revendications 10 à 12, caractérisée en ce qu'elle comporte également des moyens d'entraînement (76) qui viennent en prise avec les bords périphériques des deux disques (68) en vue de les faire tourner, afin de provoquer un déplacement de l'organe de guidage d'indexation (72) à partir de la position de repos suivant une trajectoire de déplacement sensiblement circulaire.

14. Ramasseuse-presse selon la revendication 13, caractérisée en ce que les moyens d'entraînement comportent des pignons (76) adaptés en vue d'un engrènement avec une denture (74) formée sur les bords périphériques des deux disques (68).

15. Ramasseuse-presse selon la revendication 14, caractérisée en ce que les pignons (76) sont reliés entre eux par un arbre transversal (80), tandis qu'un dispositif d'embrayage et de frein électrique est accouplé avec l'une des extrémités dudit arbre transversal (80); le dispositif d'embrayage et de frein pouvant selectivement opérer soit comme un embrayage pour permettre une rotation de l'arbre (80), des pignons (76) et des disques (68), soit comme un frein pour maintenir fixes l'arbre (80), les pignons (76) et les disques (68).

16. Ramasseuse-presse selon l'une quelconque des revendications précédentes, caractérisée en ce que des moyens d'entraînement sont associés aux moyens de formage de balles supérieurs (66) en vue d'entraîner lesdits moyens de formage de balles supérieurs (66) dans une direction propre, conjointement avec les moyens de formage de balles inférieurs (28), à obliger des produits de récolte à s'enrouler entre ceux-ci; lesdits moyens d'entraînement comportant des rouleaux d'entraînement (40, 44) qui viennent en prise avec les moyens de formage de balles supérieurs (66), et un mécanisme d'embrayage destiné à permettre l'embrayage, respectivement le débrayage, de la transmission aux moyens de formage de balles supérieurs (66).

17. Méthode pour former des balles cylindriques de produits de récolte dans une ramasseuse-presse comportant: a) des moyens de formage de balles supérieurs et inférieurs (66, 28) qui coopèrent pour définir entre eux une zone de commencement de balles (69); b) des organes d'entraînement (40, 30) respectivement associés aux moyens de formage de balles supérieurs et inférieurs (66, 28), en vue de déplacer lesdits moyens de formage de balles (66, 28) dans des directions propres à rouler des produits de récolte sous la forme d'une balle cylindrique dans la zone de commencement de balles (69); et c) des moyens d'indexation mobiles (68, 72) associés aux moyens de formage de balles supérieurs (66) et comportant un organe de guidage d'indexation (72) qui possède une position de repos pour guider les moyens de formage de balles supérieurs (66) à proximité des moyens de formage de balles inférieurs (28), à l'arrière de la zone de commencement de balles (69); la méthode comportant les étapes qui consistent à:
- accoupler les organes d'entraînement (40, 30) avec une source de puissance pour déplacer les moyens de formage de balles (66, 28) dans lesdites directions propres à commencer une première balle cylindrique dans la zone de commencement de balles (69);
- maintenir l'organe de guidage d'indexation (72) dans sa position de repos pendant la formation de la première balle cylindrique dans la zone de commencement de balles (69); et

- déplacer l'organe de guidage d'indexation (72) à partir de la position de repos suivant une trajectoire de déplacement sensiblement circulaire, lorsque la première balle cylindrique atteint une taille prédéterminée; et
étant caractérisée en ce qu'elle comporte également les étapes qui consistent à:
- ramener ledit organe de guidage d'indexation (72) dans la position de repos en lui faisant effectuer un tour complet de 360 degrés le long de ladite trajectoire de déplacement sensiblement circulaire, lorsque ladite première balle cylindrique est en train d'être terminée, pour ainsi reformer la zone de commencement de balles (69); et
- maintenir à nouveau ledit organe de guidage d'indexation (72) dans la position de repos, tout en évacuant simultanément de la remasseuse-presse la première balle cylindrique et en commençant une seconde balle cylindrique dans la zone de commencement de balles (69) reformée; le dispositif étant, en outre, tel que les moyens d'indexation (68, 72) ne comportent qu'un organe de guidage d'indexation unique (72).

18. Méthode selon la revendication 17, caractérisée en ce qu'elle comporte aussi l'étape qui consiste à enrouler autour de la première balle présente dans la ramasseuse-presse un matériau d'enroulement, tout en commençant la seconde balle dans la zone de commencement de balles (69) reformée, et avant d'évacuer de la ramasseuse-presse ladite première balle cylindrique.

19. Méthode selon la revendication 17 ou 18, caractérisée en ce qu'elle comporte également l'étape qui consiste à continuer à ajouter des produits de récolte à la première balle cylindrique présente dans la ramasseuse-presse, tout en déplaçant l'organe de guidage d'indexation unique (72) de la position de repos dans une seconde position, sur une distance inférieure à un tour complet de 360 degrés le long de la trajectoire de déplacement sensiblement circulaire.

20. Méthode selon la revendication 19, caractérisée en ce qu'elle comporte également les étapes qui consistent à:
- stopper l'adjonction de produits de récolte à la première balle cylindrique présente dans la ramasseuse-presse, au moment où l'organe de guidage d'indexation unique (72) est déplacé à partir de la seconde position pour revenir dans la position de repos, et
- commencer ensuite la formation de la seconde balle cylindrique dans la zone de formage de balles (69) reformée, tout en maintenant à nouveau l'organe de guidage d'indexation (72) dans la position de repos.

21. Méthode selon l'une quelconque des revendications 17 à 20, caractérisé en ce que l'étape de déplacement comporte une rotation de deux disques (68) prévus sur la ramasseuse-presse et comportant l'organe de guidage d'indexation unique (72) qui s'étend entre eux, en un point situé radialement vers l'extérieur par rapport à l'axe de rotation (70) des disques (68), lorsque la première balle cylindrique atteint ladite taille prédéterminée.

22. Méthode selon la revendication 21, caractérisé en ce que l'étape de retour comporte un arrêt des deux disques (68), une fois que l'organe de guidage d'indexation unique (72) a effectué ledit tour complet de 360 degrés le long de la trajectoire de déplacement circulaire.

23. Méthode selon l'une quelconque des revendications 17 à 22, caractérisée en ce que les étapes de maintien comportent un serrage des moyens de formage de balles supérieurs (66) contre les moyens de formage de balles inférieurs (28), à l'arrière de la zone de commencement de balles (69).

24. Méthode selon la revendication 19 ou l'une quelconque des revendications 20 à 23, lorsqu'elles sont annexées à la revendication 19, caractérisée en ce qu'elle comporte aussi les étapes qui consistent à:
– désaccoupler les organes d'entraînement (40, 30) vis-à-vis de la source de puissance, lorsque la première balle cylindrique est en train d'être terminée et une fois que l'organe de guidage d'indexation unique (72) a été déplacé de la position de repos dans la seconde position sur une distance inférieure à un tour complet de 360 degrés le long de la trajectoire de déplacement sensiblement circulaire, et
– réaccoupler les organes d'entraînement (40, 30) avec la source de puissance, une fois que l'organe de guidage d'indexation unique (72) a été déplacé à partir de ladite seconde position pour revenir dans la position de repos, pour ainsi effectuer ledit tour complet de 360 degrés.

25. Méthode selon la revendication 24, caractérisée en ce que ladite seconde position de l'organe de guidage d'indexation unique (72) est située à mi-chemin le long de la trajectoire de déplacement sensiblement circulaire et à proximité de l'organe d'entraînement (40) destiné aux moyens de formage de balles supérieurs (66).

**Patentansprüche**

1. Rundballenpresse zur Formung von Rundballen aus Erntematerial mit:
– unteren Rundballen-Formeinrichtungen (28),
– oberen Rundballen-Formeinrichtungen (66), die mit den unteren Rundballen-Formeinrichtungen (28) zusammenwirken, um einem Rundballen-Anfangsbereich (69) zwischen diesen Rundballen-Formeinrichtungen zu bilden, und
– bewegliche Weiterschalteinrichtungen (68, 72), die den oberen Rundballen-Formeinrichtungen (66) zugeordnet sind und ein Weiterschalt-Führungsteil (72) einschliessen, das eine Ausgangsposition zur Führung der oberen Rundballen-Formeinrichtungen (66) in der Nähe der unteren Rundballen-Formeinrichtungen (28) am hinteren Ende des Rundballen-Anfangsbereichs (69) aufweist, wobei die Weiterschalteinrichtung (68, 72) so betätigbar ist, dass sie das Weiterschalt-Führungsteil (72) ausgehend von der Ausgangsstellung auf einer im wesentlichen kreisförmigen Bewegungsbahn bewegt, wenn ein in dem Rundballen-Anfangsbereich (69) begonnener Rundballen eine vorgegebene Grösse erreicht, dadurch gekennzeichnet, dass
– die Weiterschalteinrichtungen (68, 72) lediglich ein einziges Weiterschalt-Führungsteil (72) umfassen, und
dass die Weiterschalteinrichtungen (68, 72) während der Bildung eines Rundballens in der Rundballenpresse so betätigt werden, dass sie das einzige Weiterschalt-Führungsteil (72) von der Ausgangsposition über eine volle 360°-Drehung um die Bewegungsbahn herum und zurück zur Ausgangsposition bewegen.

2. Rundballenpresse nach Anspruch 1, dadurch gekennzeichnet, dass sich die Bewegungsbahn des einzigen Weiterschalt-Führungsteils (72) allgemein um den Umfang des in der Rundballenpresse gebildeten Rundballens erstreckt.

3. Rundballenpresse nach Anspruch 1 oder 2, dadurch gekennzeichnet, dass das bewegliche Weiterschalt-Führungsteil eine Walze (72) umfasst, die mit den oberen Rundballen-Formeinrichtungen (66) in Eingriff bringbar ist.

4. Rundballenpresse nach einem der vorhergehenden Ansprüche, dadurch gekennzeichnet, dass das bewegliche Weiterschalt-Führungsteil (72) ein Anpressen der oberen Rundballen-Formeinrichtungen (66) gegen die unteren Rundballen-Formeinrichtungen (28) am hinteren Ende des Rundballen-Anfangsbereichs (69) bewirkt, wenn sich dieses Weiterschalt-Führungsteil (72) in der Ausgangsposition befindet.

5. Rundballenpresse nach einem der vorhergehenden Ansprüche, dadurch gekennzeichnet, dass die oberen Rundballen-Formeinrichtungen (66) einen unteren Strang (67) umfassen, dessen Länge um den Umfang eines Rundballens während dessen Formung in der Rundballenpresse ausdehnbar ist, dass das bewegliche Weiterschalt-Führungsteil (72) in der Ausgangsposition hinter dem unteren Strang (67) angeordnet ist und von dieser Ausgangsposition entlang der im wesentlichen kreisförmigen Bewegungsbahn in eine Position bewegbar ist, die vor dem unteren Strang (67) liegt, der sich um den Umfang des gerade geformten Rundballens erstreckt.

6. Rundballenpresse nach einem der vorhergehenden Ansprüche, mit zwei Seitenwänden (13), die allgemein an den in Querrichtung gegenüberliegenden Seiten der unteren und oberen Rundballen-Formeinrichtungen (28 bzw. 66) angeordnet sind, wobei die Seitenwände (13) zusammen mit den unteren und oberen Rundballen-Formeinrichtungen (28 bzw. 66) zwischen sich den Rundballen-Anfangsbereich (69) bilden, dadurch gekennzeichnet, das sich das bewegliche Weiterschalt-Führungsteil (72) in Querrichtung zwischen den in Querrichtung gegenüberliegenden Seitenwänden (13) und allgemein parallel zu dem Rundballen-Anfangsbereich (69) erstreckt.

7. Rundballenpresse nach einem der vorhergehenden Ansprüche, dadurch gekennzeichnet, dass
– die unteren Rundballen-Formeinrichtungen eine Fördereinrichtung in Form eines endlosen Riemens (28) umfassen, und
- die oberen Rundballen-Formeinrichtungen eine Reihe von endlosen Riemen (66) umfassen, die in Querrichtung Seite an Seite angeordnet sind, wobei das bewegliche Weiterschalt-Führungsteil (72) mit den sich Seite an Seite erstreckenden Riemen (66) in Eingriff bringbar ist.

8. Rundballenpresse nach Anspruch 7, dadurch gekennzeichnet, dass das bewegliche Weiterschalt-Führungsteil (72) mit den sich Seite an Seite erstreckenden endlosen Riemen (66), die die oberen Rundballen-Formeinrichtungen bilden, an einer Position innerhalb deren Umschlingung und an der Seite in Eingriff bringbar ist, die von den unteren Rundballen-Formeinrichtungen (28) abgewandt ist.

9. Rundballenpresse nach einem der vorhergehenden Ansprüche, dadurch gekennzeichnet, dass die Rundballenpresse weiterhin einen Hauptrahmenteil (12) und einen Hilfsrahmenteil (16) umfasst, der schwenkbar an dem Hauptrahmenteil (12) für eine Bewegung zwischen einer geschlossenen, einen Rundballen formenden Position und einer offenen, einen Rundballen auswerfenden Position verbunden ist, wobei die beweglichen Weiterschalteinrichtungen (68, 72) beweglich an dem Hauptrahmenteil (12) gehaltert sind.

10. Rundballenpresse nach Anspruch 9, dadurch gekennzeichnet, dass
- die Weiterhalteinrichtungen (68, 72) zwei drehbar an dem Hauptrahmenteil (12) befestigte Scheiben (68) umfassen, und
- das Weiterschalt-Führungsteil (72) zwischen den beiden Scheiben (68) mit diesen verbunden ist.

11. Rundballenpresse nach Anspruch 10 unter Rückbeziehung auf Anspruch 6, dadurch gekennzeichnet, dass jede Scheibe (68) der beiden Scheiben (68) eng benachbart und parallel zu einer entsprechenden Seitenwand (13) an der auf die andere Seitenwand (13) gerichteten Seite angeordnet ist, und dass die Scheiben (68) drehbar an den jeweils benachbarten Seitenwänden (13) befestigt sind.

12. Rundballenpresse nach Anspruch 10 oder 11, dadurch gekennzeichnet, dass das Weiterschalt-Führungsteil (72) zwischen den beiden Scheiben (68) an einer radial ausserhalb von deren Drehachse (70) gelegenen Stelle mit diesen verbunden ist.

13. Rundballenpresse nach einem der Ansprüche 10 bis 12, dadurch gekennzeichnet, dass sie weiterhin Antriebseinrichtungen (76) umfasst, die mit den Umfangskanten der beiden Scheiben (68) zu drehen und eine Bewegung des Weiterschalt-Führungsteils (72) ausgehend von der Ausgangsposition auf der im wesentlichen kreisförmigen Bewegungsbahn hervorzurufen.

14. Rundballenpresse nach Anspruch 13, dadurch gekennzeichnet, dass die Antriebseinrichtungen Ritzel (76) umfassen, die für einen Eingriff mit Zähnen (74) ausgebildet sind, die an den Umfangsrändern der beiden Scheiben (68) ausgeformt sind.

15. Rundballenpresse nach Anspruch 14, dadurch gekennzeichnet, dass die Ritzel (76) miteinander über eine Querwelle (80) verbunden sind, dass eine elektrische Kupplungs- und Bremseinrichtung mit einem Ende der Querwelle (80) verbunden ist, und dass die elektrische Kupplungs- und Bremseinrichtung selektiv betätigbar ist, sodass sie entweder als eine Kupplung zur Drehung der Welle (80), der Ritzel (76) und der Scheiben (68) oder als Bremse wirkt, umd die Welle (80), die Ritzel (76) und die Scheiben (68) stationär zu halten.

16. Rundballenpresse nach einem der vorhergehenden Ansprüche, dadurch gekennzeichnet, dass Antriebseinrichtungen den oberen Rundballen-Formeinrichtungen (66) zugeordnet sind, um die oberen Rundballen-Formeinrichtungen (66) in einer derartigen Richtung anzutreiben, dass sie zusammen mit den unteren Rundballenformeinrichtungen (28) ein Aufwickeln von Erntematerial zwischen diesen Formeinrichtungen hervorrufen, und dass die Antriebseinrichtungen mit den oberen Rundballen-Formeinrichtungen (66) zusammenwirkende Antriebsrollen (40, 44) und einen Kupplungsmechanismus umfassen, der das Einkuppeln bzw. Auskuppeln des Antriebs für die oberen Rundballen-Formeinrichtungen (66) ermöglicht.

17. Verfahren zur Formung von Rundballen aus Erntematerial in einer Rundballenpresse, die: a) obere und untere Rundballen-Formeinrichtungen (66, 28), die zusammenwirken, um zwischen sich einen Rundballen-Anfangsbereich (69) zu bilden, b) jeweils den oberen und unteren Rundballen-Formeinrichtungen (66, 28) zugeordnete Antriebsteile (40, 30) zur Bewegung der Rundballen-Formeinrichtungen (66, 28) in derartigen Richtungen, das Erntematerial in dem Rundballen-Anfangsbereich (69) zu einem Rundballen aufgerollt wird, und c) bewegliche Weiterschalteinrichtungen (68, 72) aufweist, die den oberen Rundballen-Formeinrichtungen (66) zugeordnet sind und ein Weiterschalt-Führungsteil (72) einschliessen, das eine Ausgangsposition zur Führung der oberen Rundballen-Formeinrichtungen (28) in der Nähe der unteren Rundballen-Formeinrichtungen (28) am hinteren Ende des Rundballen-Anfangsbereichs (69) aufweist, wobei das Verfahren die folgenden Schritte umfasst:
- Kuppeln der Antriebseinrichtungen (40, 30) mit einer Leistungsquelle, um die Rundballen-Formeinrichtungen (66, 28) in den genannten Richtungen zu bewegen, um einen ersten Rundballen in dem Rundballen-Anfangsbereich (69) zu beginnen,
- Festhalten des Weiterschalt-Führungsteils (72) in seiner Ausgangsposition während der Bildung des ersten Rundballens in dem Rundballen-Anfangsbereich (69), und
- Bewegen des Weiterschalt-Führungsteils (72) ausgehend von der Ausgangsposition auf einer im wesentlichen kreisförmigen Bewegungsbahn, wenn der erste Rundballen eine vorgegebene Grösse erreicht, dadurch gekennzeichnet, dass das Verfahren weiterhin die folgenden Schritte umfasst:

- Rückführen des Weiterschalt-Führungsteils (72) in die Ausgangsposition über eine Umdrehung über volle 360° entlang der allgemeinkreisförmigen Bewegungsbahn, wenn der erste Rundballen vervollständigt wird, um auf diese Weise den Rundballen-Anfangsbereich (69) neu zu bilden, und

- erneutes Festhalten des Weiterschalt-Führungsteils (72) in der Ausgangsposition, während gleichzeitig der erste Rundballen aus der Rundballenpresse ausgeworfen wird und ein zweiter Rundballen in dem neu gebildeten Rundballen-Anfangsbereich (69) begonnen wird, wobei die Anordnung weiterhin derart ist, dass die Weiterschalteinrichtungen (68, 72) lediglich ein einziges Weiterschalt-Führungsteil (72) umfassen.

18. Verfahren nach Anspruch 17, dadurch gekennzeichnet, dass es weiterhin den Schritt des Umwickelns des ersten Rundballens in der Rundballenpresse mit Wickelmaterial umfasst, während der zweite Rundballen in dem neu gebildeten Rundballen-Anfangsbereich (69) begonnen wird und bevor der erste Rundballen aus der Rundballenpresse ausgeworfen wird.

19. Verfahren nach Anspruch 17 oder 18, dadurch gekennzeichnet, dass es weiterhin den Schritt der Fortsetzung der Zuführung von Erntematerial an den ersten Rundballen in der Rundballenpresse umfasst, während das einzige Weiterschalt-Führungsteil (72) ausgehend von der Ausgangsposition über weniger als die volle Umdrehung über 360° entlang der im wesentlichen kreisförmigen Bewegungsbahn auf eine andere Position bewegt wird.

20. Verfahren nach Anspruch 19, dadurch gekennzeichnet, dass es weiterhin die folgenden Schritte umfasst:
- Stoppen der Hinzufügung von Erntematerial an den ersten Rundballen in der Rundballenpresse, wenn das einzige Weiterschalt-Führungsteil (72) von der weiteren Position zurück in die Ausgangsposition bewegt wird, und
- nachfolgendes Einleiten der Bildung des zweiten Rundballens in dem neu gebildeten Rundballen-Anfangsbereich (69), während das Weiterschalt-Führungsteil (72) erneut in der Ausgangsposition festgehalten wird.

21. Verfahren nach einem der Ansprüche 17 bis 20, dadurch gekennzeichnet, dass der Schritt des Bewegens die Drehung von zwei an der Rundballenpresse vorgesehenen Scheiben (68), zwischen denen sich das einzige Weiterschalt-Führungsteil (72) an einer radial ausserhalb der Drehachse (70) der Scheiben (68) liegenden Stelle erstreckt, einschliesst, wenn der erste Rundballen die vorgegebene Grösse erreicht.

22. Verfahren nach Anspruch 21, dadurch gekennzeichnet, dass der Schritt des Rückführens das Stoppen der beiden Scheiben (68) umfasst, nachdem das einzige Weiterschalt-Führungsteil (72) die eine volle 360°-Umdrehung entlang der kreisförmigen Bewegungsbahn ausgeführt hat.

23. Verfahren nach einem der Ansprüche 17 bis 22, dadurch gekennzeichnet, dass die Schritte des Festhaltens das Anpressen der oberen Rundballen-Formeinrichtungen (66) gegen die unteren Rundballen-Formeinrichtungen (28) an der Hinterseite des Rundballen-Anfangsbereichs (69) einschliessen.

24. Verfahren nach Anspruch 19 oder einem der Ansprüche 20 bis 23 unter Rückbeziehung auf Anspruch 19, dadurch gekennzeichnet, dass es weiterhin die folgenden Schritte umfasst:
- Entkuppeln der Antriebseinrichtungen (40, 30) von der Antriebsquelle, wenn der erste Rundballen vervollständigt wurde und wenn das einzige Weiterschalt-Führungsteil (72) von der Ausgangsposition in eine andere Position bewegt wurde, die vor dem Ende der vollen 360°-Umdrehung entlang der im wesentlichen kreisförmigen Bewegungsbahn liegt, und
- erneutes Kuppeln der Antriebseinrichtungen (40, 30) mit der Antriebsquelle, wenn das einzige Weiterschalt-Führungsteil (72) von der anderen Position zurück zur Ausgangsstellung bewegt wurde, wodurch die Umdrehung über die vollen 360° vervollständigt wird.

25. Verfahren nach Anspruch 24, dadurch gekennzeichnet, dass die andere Position des einzigen Weiterschalt-Führungsteils (72) auf einem Teil des Weges entlang der im wesentlichen kreisförmigen Bewegungsbahn und benachbart zu der Antriebseinrichtung (40) für die oberen Rundballen-Formeinrichtungen (66) liegt.

*Fig. 1*

EP 0 189 232 B1

Fig. 2

Fig. 3

15

Fig. 4

Fig. 5

Fig. 6